# EUROPEAN PATENT APPLICATION

(11) **EP 2 134 118 A2**
(43) Date of publication of application: **16.12.2009**
(21) Application number: 09153526.0
(22) Date of filing: 24.02.2009
(51) Int. Cl.: H04W 36/00

(54) **Base station and frequency changing method in mobile communication system**

(30) Priority: 09.06.2008 JP 2008151041
(71) Applicant: Fujitsu Limited, Kawasaki-shi, Kanagawa 211-8588 (JP)
(72) Inventor: Kaginushi, Hiroshi, Kawasaki-shi, Kanagawa 211-8588 (JP); Minamino, Kenichi, Kawasaki-shi, Kanagawa 211-8588 (JP); Kanayama, Hirokazu, Kawasaki-shi, Kanagawa 211-8588 (JP)
(74) Representative: Holtby, Christopher Lawrence

(57) **Abstract**

A frequency changing method that can avoid a collision between uplink frequencies by using a simple algorithm. According to this method, a list of the frequencies of mobile stations whose receive status was OK and a list of the frequencies of mobile stations whose receive status was NG, requiring each mobile station to retransmit by changing its frequency, are constructed at a base station; then, for each of the frequencies in the receive status NG list, the amount of shift, Δf, predetermined in the system, is added and, if the result coincides with any one of the frequencies in the receive status OK list, Δf is added once again.

## Description

### FIELD

The embodiments disclosed herein are directed to a base station and a method for changing the frequency of a mobile station in a mobile communication system in which each mobile station transmits to a base station by using a different time-slot/frequency combination.

### BACKGROUND

In recent years, the demand for radio frequencies, which are limited resources, has been growing in the field of mobile communication systems such as mobile telephone systems, and this has been driving the need for efficient utilization of the frequencies. To achieve this, various strategies have been employed, in which a plurality of mobile stations use frequency bands for uplink communications by combining frequency-division and time-division multiplexing techniques and, in another, each station transmits by changing the frequency band it uses, thereby aiming to make efficient use of the frequencies.

If the plurality of mobile stations use the same frequency in the same time slot, the base station can not receive radiowaves correctly; in view of this, the frequencies that the mobile stations use are usually managed at the base station, and the shared use of the frequencies is realized by providing information (scheduling grant), such as "mobile station ID," "information on the radio resources (frequency band, time slot) that the mobile station is allowed to use," and "modulation method," to each mobile station.

As the mobile station moves around, communication conditions change due to changes in the radio propagation environment; as a result, when the mobile station is communicating using a certain specific frequency band, if the communication conditions in that frequency band worsen, the transmission efficiency drops. Therefore, it is common practice for the mobile station to perform communication by changing the frequency band it uses (for example, see Japanese Laid-open Patent Publication No. 2006-33480).

If the uplink data from the mobile station has failed to be received correctly by the base station, the mobile station retransmits the data by responding to retransmission control (HARQ: Hybrid ARQ) from the base station. Usually, the retransmission is performed by changing the modulation method and the frequency band, because it is desirable to retransmit the data using different transmission conditions than those used for the previous transmission. As the method of retransmission, a non-adaptive method may be used in which the retransmission method is fixedly determined at the initiation of the first transmission in accordance with a prescribed rule agreed upon between the mobile station and the base station. The non-adaptive method is, for example, such that, when frequency band A is used for the first transmission, the next retransmission is performed using frequency band B (the frequency shifted by a predetermined amount from the frequency band A) (for example, see Japanese laid-open Patent Publication No. H11-355246).

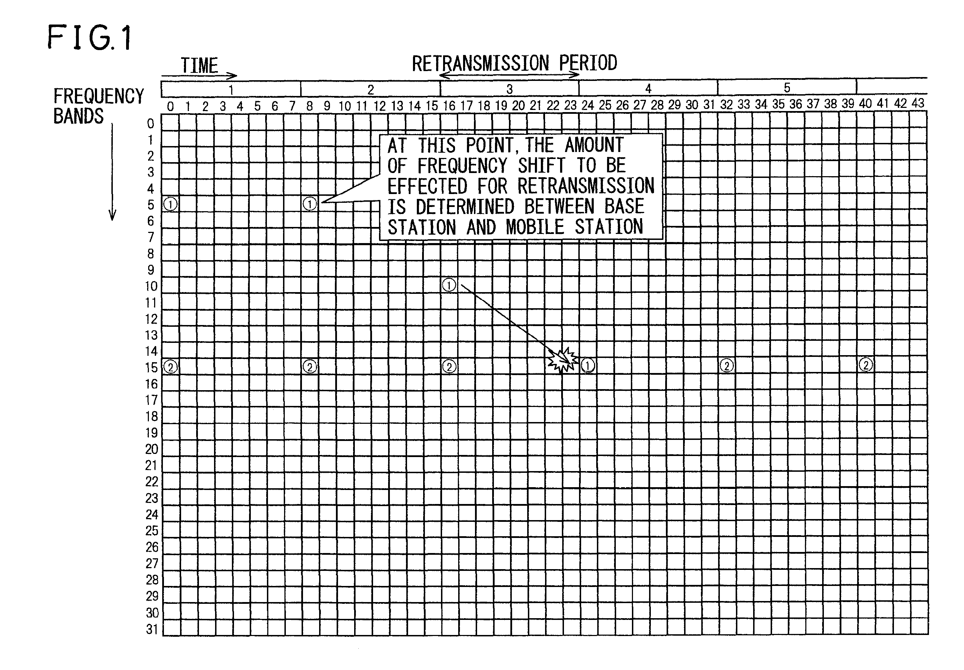

However, in the case of the non-adaptive HARQ method, if there are, as depicted in Figure 1, a mobile station 1 for which changing the frequency for retransmission is permitted (or supported) and a mobile station 2 which uses the same frequency band for retransmission (or which continues to use the same frequency band because the communication conditions are good), the frequency band that the mobile station 1 uses overlaps the frequency band used by the mobile station 2.

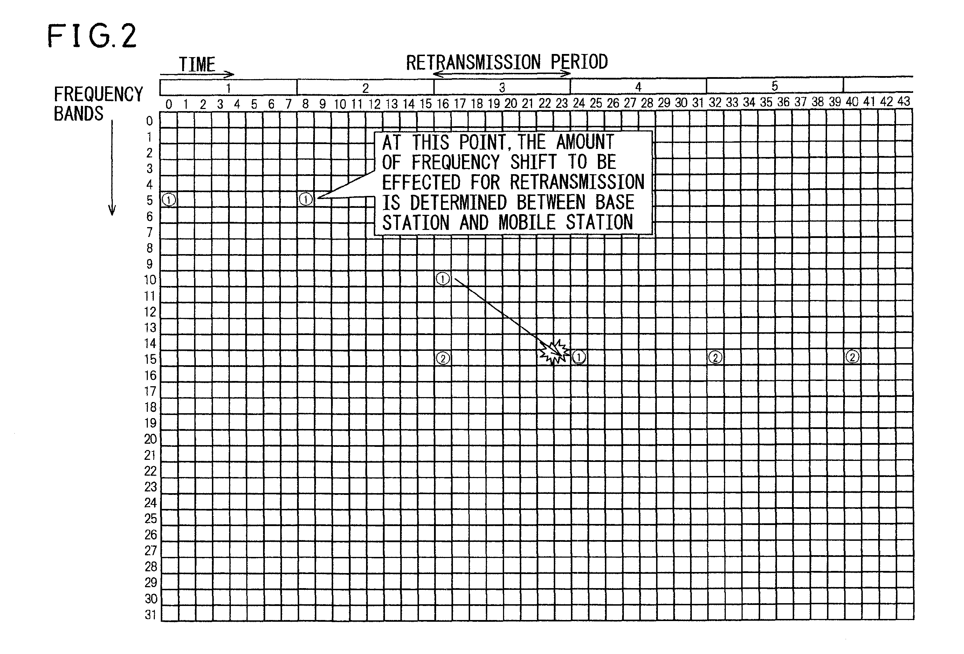

Further, as depicted in Figure 2, there can occur cases where, when the mobile station 1 performs the first transmission, the mobile station 2 has not yet started transmission but starts transmission after that. In such cases also, if a retransmission from the mobile station 1 occurs, the frequency band that the mobile station 1 uses overlaps the frequency band used by the mobile station 2, because the amount of frequency shift to be effected at the time of retransmission has already be determined between the base station and the mobile station 1.

Furthermore, when there are a large number of mobile stations being served by the base station, i.e., when the frequency usage is high, processing logic becomes complex because it becomes difficult to determine the frequency to which each frequency is to be changed. In addition, the frequency utilization efficiency drops because spare frequencies, for example, have to be reserved to provide for such frequency changes.

### SUMMARY

An object of the techniques disclosed herein is to provide a method that avoids the problem of frequency band overlapping that may occur when the frequency is changed for retransmission. Another object of the techniques disclosed herein is to provide an apparatus that determines the destination frequency by using a simple algorithm.

According to one aspect of the techniques disclosed herein, there is provided, in a communication system in which a plurality of mobile stations transmit to a base station by using respectively different timeslot/frequency combinations, a method for determining a transmit frequency of each mobile station, comprising: at the base station, identifying in each time slot a first mobile station whose frequency is not changed and a second mobile station whose frequency is changed; at the base station, determining for each second mobile station a frequency that coincides with neither the frequency of the first mobile station nor the frequency of any other second mobile station; and delivering notification from the base station to the second mobile station to notify the second mobile station of the determined frequency.

Preferably, the step of determining the frequency for the second mobile station includes the steps of: (a) when the frequency of any one of the second mobile stations is changed stepwise by an amount predetermined in the system, determining whether the changed frequency coincides with any frequency being used by the first mobile station; (b) repeating the step (a) until a frequency that does not coincide with any frequency being used by the first mobile station is found; and (c) determining the frequency that coincides with neither the frequency of the first mobile station nor the frequency of any other second mobile station, by repeating the steps (a) and (b) for all of the second mobile stations.

Additional objects and advantages of the invention (embodiment) will be set forth in part in the description which follows, and in part will be obvious from the description, or may be learned by practice of the invention. The object and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF DRAWINGS

Figure 1 is a diagram (part 1) explaining the problem associated with a prior art non-adaptive HARQ method.
Figure 2 is a diagram (part 2) explaining the problem associated with the prior art non-adaptive HARQ method.
Figures 3A and 3B are diagrams depicting one example of communication between a base station and mobile stations in a mobile communication system according to one embodiment.
Figure 4 is a flowchart depicting one example of how the base station determines uplink frequencies;
Figure 5 is a diagram depicting one example of how the transmit frequency of each mobile station changes when each mobile station uses a plurality of frequency bands.
Figure 6 is a diagram schematically depicting one configuration example of the base station.

### DESCRIPTION OF EMBODIMENTS

The preferred embodiments of the present invention will be explained with reference to the accompanying drawings.

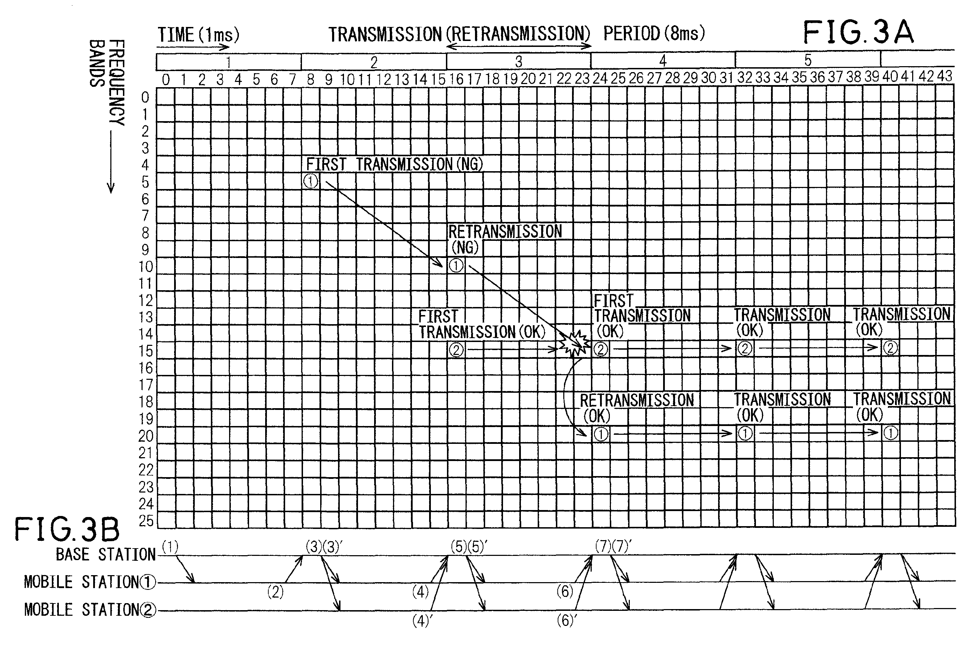

Figures 3A and 3B depict one example of communication between a base station and mobile stations in a mobile communication system according to one embodiment. Figure 3A depicts the time slots and frequency bands that the mobile stations (mobile station 1 and mobile station 2) use for transmission. In Figure 3A, the time is plotted along the horizontal axis. The transmission (retransmission) period is 8 msec, and the 8-msec interval is divided into eight time slots each with a 1-msec duration. Numbers placed alongside the horizontal axis are the numbers attached to the respective time slots. The vertical axis represents the frequency; there are depicted 26 frequency bands numbered from 0 to 25. Figure 3B depicts the sequence of communication between the base station and the mobile stations 1 and 2. The horizontal axis in Figure 3B corresponds to the horizontal axis depicted in Figure 3A.

In Figures 3A and 3B, when the base station accepts an uplink data transmission request from the mobile station 1 via a control channel not depicted, the base station notifies the mobile station 1 of the allocation of the frequency band (the fifth frequency band in the example of Figure 3A) to be used for uplink data transmission (step (1) in Figure 3B).

In the eight time slot in Figure 3A, the mobile station 1 transmits uplink data (first transmission) by using the frequency band (the fifth frequency band in Figure 3A) allocated by the base station (step (2) in Figure 3B).

If the base station has failed to receive the uplink data correctly, the base station sends a retransmission request to the mobile station 1 (step (3)' in Figure 3B). A transmission request arrives from the other mobile station 2, in response to which the base station notifies the mobile station 2 of the allocation of the frequency band (the 15th frequency band in the example of Figure 3A) for the mobile station 2 to use for uplink data transmission (step (3) in Figure 3B). At this time, the mobile station 1 does not know that the mobile station 2 is about to use the 15th frequency band.

Upon receiving the retransmission request, the mobile station 1 retransmits the data to the base station in the 16th time slot by using a new frequency band (the 10th frequency band) obtained by shifting the current frequency band by an amount (5 in the example of Figure 3A) predetermined in the system (step (4) in Figure 3B). On the other hand, the mobile station 2 transmits data to the base station by using the 15th frequency band (step (4)' in Figure 3B).

If the base station has failed to correctly receive the data retransmitted from the mobile station 1, but has been able to successfully receive the data transmitted from the mobile station 2; in this case, the base station again sends a retransmission request to the mobile station 1. Since the data from the mobile station 2 has been successfully received, the mobile station 2 continues to use the 15th frequency band for the next transmission. Since the mobile station 1 shifts the frequency band by the amount predetermined in the system, this will result in a situation where both the mobile station 1 and the mobile station 2 would use the 15th frequency band. The base station detects this situation ahead of time, and sends the retransmission request to the mobile station 1 by including the "number of additional shifts (1 in the illustrated example)" in the control data (step (5)' in Figure 3B). The base station, on the other hand, notifies the mobile station 2 that the data has been received correctly (step (5) in Figure 3B).

In the 24th time slot, the mobile station 1 would normally use the 15th frequency band, but since the "number of additional shifts" is specified by the base station, the frequency band is further shifted once, and the retransmission is performed using the 20th frequency band (step (6) in Figure 3B). The mobile station 2 transmits the data by using the same 15th frequency band as the previous transmission (step (6)' in Figure 3B).

Thereafter, when the data from the mobile stations 1 and 2 have both been received correctly by the base station, the base station notifies the mobile stations 1 and 2 that the data have been received correctly (steps (7) and (7)' in Figure 3B).

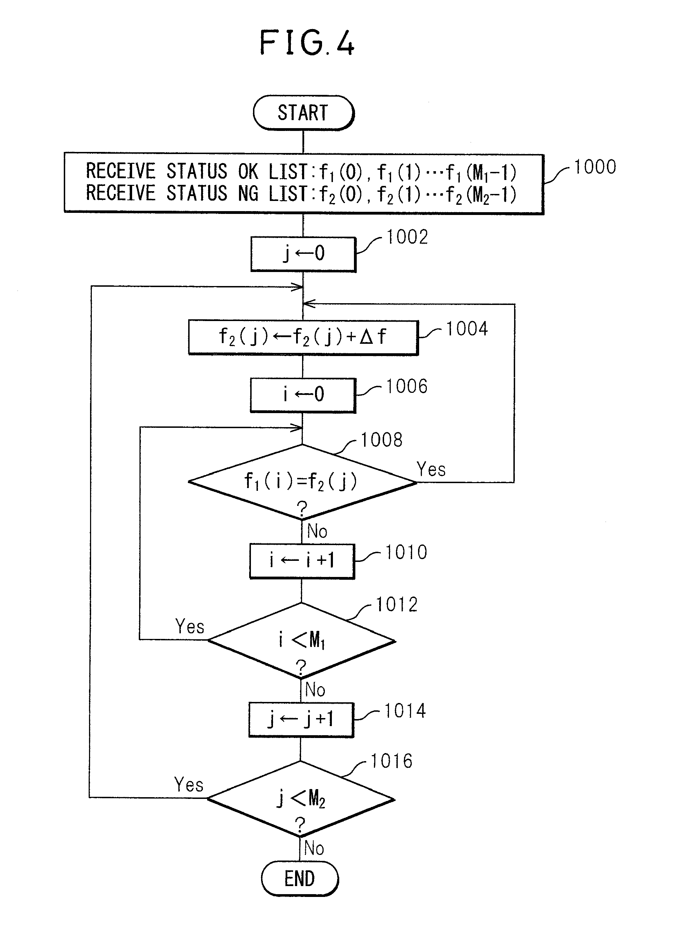

Figure 4 is a flowchart depicting one example of how the base station determines the uplink frequencies. This process is carried out for each time slot. First, the base station checks whether data have been received correctly from all the mobile stations that transmitted the uplink data in the previous time slot, and constructs a list of the frequencies, f₁(0), f₁(1), ..., f₁(M₁-1), of M₁ mobile stations whose receive status was OK and a list of the frequencies, f₂(0), f₂(1), ..., f₂(M₂-1), of M₂ mobile stations whose receive status was NG and to which a retransmission request is to be made (step 1000). The list of the mobile stations with receive status OK contains a mobile station that does not change the frequency for retransmission but always uses the same frequency regardless of when transmitting or retransmitting data.

Next, a parameter j which points to each mobile station with receive status NG is initialized to 0 to initiate the process for each mobile station with receive status NG (step 1002). In performing the process for each mobile station with receive status NG, first a tentative frequency is determined by adding the amount of frequency shift, Δf, predetermined in the system, to the frequency f₂(j) currently allocated to the mobile station j (step 1004), and the thus determined frequency is checked to see if it collides with any frequency currently being used by the mobile stations with receive status OK. More specifically, a parameter i which points to each mobile station with receive status OK is initialized to 0 (step 1006), and it is determined whether f₂(j) is equal to f₁(i) (step 1008). If they are not equal, the parameter i is updated (step 1010), and the process of steps 1008 and 1100 is repeated as long as i is less than M₁ (step 1012).

If it is detected in step 1008 that the frequency f₂(j) tentatively determined for the mobile station j with receive status NG collides with the frequency f₁(i) currently allocated to the mobile station i with receive status OK, the process returns to step 1004 to add another Δf, and the result is checked to see if it collides with the mobile station with receive status OK.

If, in step 1012, the parameter i reaches M₁ indicating the total number of mobile stations with receive status OK, that is, if it is determined that the frequency f₂(j) tentatively determined for the mobile station j with receive status NG does not coincide with any one of the frequencies, f₁(0), f₁(1), ..., f₁(M₁-1) of the M₁ mobile stations with receive status OK, then the process for the mobile station j is terminated, the parameter j is updated (step 1014), and the process from step 1004 to step 1014 is repeated until the parameter j reaches M₂ indicating the total number of mobile stations with receive status NG (step 1016).

In the above process, since the amount of frequency shift, Δf, predetermined in the system, is added to tentatively determine the frequency f₂(j) for the mobile station j with receive status NG, there is no possibility that the tentatively determined frequency will collide with the frequency determined for any other mobile station with receive status NG. This serves to simplify the process because the tentatively determined frequency need only be checked for a collision with any frequency currently being used by the mobile stations with receive status OK. Further, if a convention is adopted such that, as a general rule, the frequency is shifted by Δf in the case of a retransmission, notification concerning the number of shifts (or the number of additional shifts as earlier described) need be provided only to mobile stations that need to carry out the shifting by Δf two or more times.

Such process can be implemented in software at the base station.

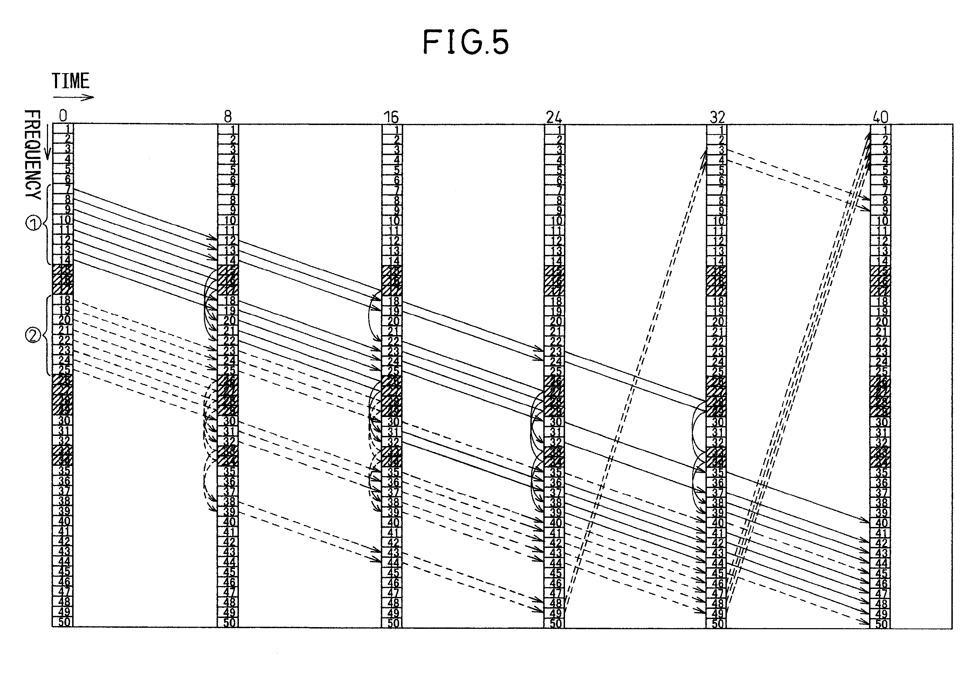

When each mobile station transmits using a plurality of frequency bands, all the frequency bands that each mobile station (with receive status OK or NG) uses are registered in the receive status OK list or the receive status NG list in step 1000, and the transmit frequency is determined for each individual frequency band by applying the algorithm depicted in Figure 4. Figure 5 depicts how the transmit frequency changes in that case. In Figure 5, the numbers written within the cells of the respective frequency bands in the respective time slots 0, 8, 16, 24, 32, and 40 are the numbers assigned to the respective frequency bands. In time slot 0, the frequency bands 7 to 14 are used by the mobile station 1, and the frequency bands 18 to 25 are used by the mobile station 2. The frequency bands 15 to 17, 26 to 29, and 33 and 34 indicated by oblique hatching are the frequency bands occupied by the mobile stations that do not change the frequency bands for retransmission or that continue to use the same frequency bands because the communication conditions are good.

If the retransmissions from the mobile stations 1 and 2 occur in succession; then, the frequency bands used by the mobile station 1 change as depicted by solid arrows, while the frequency bands used by the mobile station 2 change as depicted by dashed arrows. In time slot 0, contiguous frequency bands are allocated to each mobile station, but the frequency bands are distributed as the frequencies used are repeatedly changed for retransmission. In this way, when the frequencies used are repeatedly changed, the frequencies used by each mobile station are distributed in a non-contiguous manner. At the base station that accommodates a large number of mobile stations, it is generally difficult to allocate contiguous frequency bands to each mobile station; if contiguous frequency bands had to be allocated, reserve areas would have to be provided by considering the loss due to the division, and as a result, the frequency utilization efficiency would drop.

In the example of Figure 5, the frequency bands used by each mobile station are distributed, but all the frequencies can be used without wasting the bandwidth, and there is no need to provide extra frequency bands.

In step 1004 of Figure 4, instead of determining the tentative frequency by using the amount of shift predetermined in the system, a frequency band of relatively good conditions may be selected for use. In this case, since there is the possibility that the thus determined frequency may collide with some other frequency similarly determined, in the loop of steps 1008 to 1012 the obtained frequency is checked for a collision not only with any one of the frequencies, f₁(0), f₁(1), ..., f₁(M₁-1), currently being used by the mobile stations with receive status OK, but also with any one of the frequencies, f₂(0), f₂(1), ..., f₂(j-1), determined for the mobile stations with receive status NG. Furthermore, in this case, the thus changed frequency (or its number) needs to be reported to all the mobile stations with receive status NG.

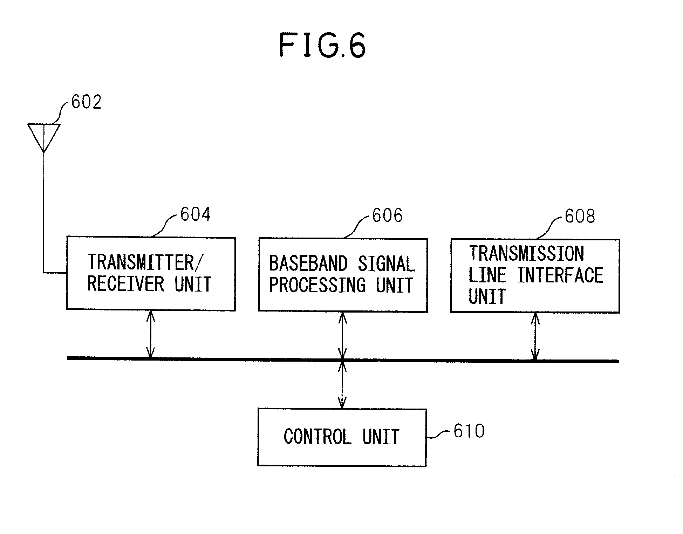

Figure 6 is a diagram schematically depicting one configuration example of the base station. In Figure 6, reference numeral 602 is an antenna, 604 is a transmitter/receiver unit for amplifying a transmit/receive signal, 606 is a baseband signal processing unit for performing modulation, demodulation, radio communication control, etc., 608 is a transmission line interface unit that interfaces with a wired transmission line, and 610 is a control unit responsible for controlling the entire apparatus. The baseband signal processing unit 606 carries out processing using a processor, memory, etc. The program depicted in the flowchart of Figure 4 is loaded into the memory, and executed by the processor to implement the uplink frequency determining process at the base station.

According to the techniques disclosed herein, the base station determines the frequency that does not coincide with any frequency used by first mobile stations which do not change their frequencies, nor with the frequency used by any other second mobile station which changes its frequency, and notifies the requesting second mobile station of the thus determined frequency, thereby avoiding the problem of frequency band overlapping.

Furthermore, the frequency of the second mobile station is changed stepwise by an amount predetermined in the system, and the frequency thus determined is checked to see if it collides with any frequency used by the first mobile stations which do not change their frequencies; by so doing, the frequency can be determined that does not collide not only with the frequencies used by the first mobile stations but also with the frequencies used by other second mobile stations which change their frequencies, and thus the destination frequency can be determined using a simple algorithm.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of superiority and inferiority of the invention. Although the embodiments of the present invention have been described in detail, it should be understood that the various changes, substitutions, and alterations could be made hereto without departing from the spirit and scope of the invention.

## Claims

1. A method for determining a transmit frequency of each mobile station, in a communication system in which a plurality of mobile stations transmit to a base station by using respectively different time-slot/frequency combinations, the method comprising:
identifying in each time slot a first mobile station whose frequency is not changed and a second mobile station whose frequency is changed, at the base station;
determining for each second mobile station a frequency that coincides with neither the frequency of the first mobile station nor the frequency of any other second mobile station, at the mobile station; and
delivering notification from the base station to the second mobile station to notify the second mobile station of the determined frequency.

2. A method as claimed in claim 1, wherein a process of the determining of the frequency for the second mobile station includes:
(a) when the frequency of any one of the second mobile stations is changed stepwise by an amount predetermined in the system, determining whether the changed frequency coincides with any frequency being used by the first mobile station;
(b) repeating process (a) until a frequency that does not coincide with any frequency being used by the first mobile station is found; and
(c) determining the frequency that coincides with neither the frequency of the first mobile station nor the frequency of any other second mobile station, by repeating processes (a) and (b) for all of the second mobile stations.

3. A method as claimed in claim 2, wherein in a process of the notifying of the second mobile station, the second mobile station is notified of the changed frequency only when the second mobile station carried out process (a) two or more times.

4. A method as claimed in claim 1, wherein at least some of the plurality of mobile stations each transmit by using a plurality of frequency bands, and wherein in a process of the determining of the frequency for each second mobile station, the frequency is determined separately for each of the plurality of frequency bands.

5. In a communication system in which a plurality of mobile stations transmit to a base station by using respectively different time-slot/frequency combinations, the base station comprising:
a identifying unit for identifying in each time slot a first mobile station whose frequency is not changed and a second mobile station whose frequency is changed;
a frequency determining unit for determining for each second mobile station a frequency that coincides with neither the frequency of the first mobile station nor the frequency of any other second mobile station; and
a frequency notification unit for notifying the second mobile station of the determined frequency.

6. A base station as claimed in claim 5, wherein the frequency determining unit carries out:
(a) when the frequency of any one of the second mobile stations is changed stepwise by an amount predetermined in the system, determining whether the changed frequency coincides with any frequency being used by the first mobile station;
(b) repeating process (a) until a frequency that does not coincide with any frequency being used by the first mobile station is found; and
(c) determining the frequency that coincides with neither the frequency of the first mobile station nor the frequency of any other second mobile station, by repeating processes (a) and (b) for all of the second mobile stations.

7. A base station as claimed in claim 6, wherein the frequency notification unit notifies the second mobile station of the changed frequency only when the second mobile station carried out process (a) two or more times.

8. A base station as claimed in claim 5, wherein at least some of the plurality of mobile stations each transmit by using a plurality of frequency bands, and wherein the frequency determining unit determines the frequency separately for each of the plurality of frequency bands.
